# EUROPEAN PATENT APPLICATION

(11) **EP 3 680 288 A1**
(43) Date of publication of application: **15.07.2020**
(21) Application number: 19151587.3
(22) Date of filing: 14.01.2019
(51) Int. Cl.: C08K 3/36, C08K 7/14, C08K 7/26, C08L 67/02, C08L 23/12, C08L 77/06

(54) **THERMOPLASTIC COMPOSITIONS HAVING LOW DIELECTRIC CONSTANT**

(71) Applicant: SABIC Global Technologies B.V., 4612 PX Bergen op Zoom (NL)
(72) Inventor: ZHANG, Yaqin, Shanghai, 201319 (CN); WANG, Qin, Shanghai, 201319 (CN); SHAN, Wei, Shanghai, 2013 (CN)
(74) Representative: Elzaburu S.L.P.

(57) **Abstract**

A thermoplastic composition includes: from about 20 wt% to about 80 wt% of a polymer component including one or more of polyphthalamide (PPA), polybutylene terephthalate (PBT), polypropylene (PP) and aliphatic polyamide (PA); and from about 0.5 wt% to about 60 wt% of a filler component including porous silica particles. The composition has a dielectric constant (Dk) at 1.9 gigahertz (GHz) as measured in accordance with ASTM D150 that is less than about 3.5.

## Description

### FIELD OF THE DISCLOSURE

The present disclosure relates to thermoplastic compositions including porous silica particles that have improved dielectric properties.

### BACKGROUND OF THE DISCLOSURE

Thermoplastic compositions have been widely used in electronics and telecommunication applications to make structural or function components of antennas, radio-frequency (RF) components, and other related devices. Successive generations of mobile communications networks have utilized successively higher working frequencies. The next generation of mobile networks (e.g., 5G, or 5th generation mobile networks) are expected to utilize frequencies in the 10-100 gigahertz (GHz) range, which is much higher than current 3G and 4G networks operating in the 2-3 GHz range. In these high RF environments, the electro-magnetic (EM) waves generated by telecommunication antennas will receive much more interference by surrounding materials such as plastics and metals. In addition, plastics made from polymers are dielectric substances, which can temporarily store EM energy. Polymeric materials with a higher dielectric constant (Dk) and dissipation factor (Df) will absorb substantially more EM energy, affecting the strength and phase of the EM wave and decreasing antenna performance. Dielectric performance is thus one consideration in selecting materials for RF components.

Low Dk/Df glass fibers can be added as a reinforcement filler to thermoplastic polymers to achieve lower dielectric performance as compared to compositions including virgin glass reinforcing fibers. However, the dielectric properties of compositions including the low Dk/Df glass fibers are not low enough for certain applications that require a Dk less than 3.5 as tested at frequency of 1.9 GHz.

These and other shortcomings are addressed by aspects of the disclosure.

### SUMMARY

Aspects of the disclosure relate to a thermoplastic composition including: a. from about 20 wt% to about 80 wt% of a polymer component including one or more of polyphthalamide (PPA), polybutylene terephthalate (PBT), polypropylene (PP) and aliphatic polyamide (PA); and b. from about 0.5 wt% to about 60 wt% of a filler component including porous silica particles. The composition has a dielectric constant (Dk) at 1.9 gigahertz (GHz) as measured in accordance with ASTM D150 that is less than about 3.5.

### DETAILED DESCRIPTION

The present disclosure can be understood more readily by reference to the following detailed description of the disclosure and the Examples included therein. In various aspects, the present disclosure pertains to thermoplastic compositions including: from about 20 wt% to about 80 wt% of a polymer component including one or more of polyphthalamide (PPA), polybutylene terephthalate (PBT), polypropylene (PP) and aliphatic polyamide (PA); and from about 0.5 wt% to about 60 wt% of a filler component including porous silica particles. The compositions have a dielectric constant (Dk) at 1.9 gigahertz (GHz) as measured in accordance with ASTM D150 that is less than about 3.5.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "polymer component" includes mixtures of two or more polymer components.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions Having Low Dk

Aspects of the disclosure relate to a thermoplastic composition including: from about 20 wt% to about 80 wt% of a polymer component including one or more of polyphthalamide (PPA), polybutylene terephthalate (PBT), polypropylene (PP) and aliphatic polyamide (PA); and from about 0.5 wt% to about 60 wt% of a filler component including porous silica particles. The composition has a dielectric constant (Dk) at 1.9 gigahertz (GHz) as measured in accordance with ASTM D150 that is less than about 3.5. In certain aspects the composition has a dissipation factor (Df) at 1.9 GHz that is less than about 0.015.

The polymer component includes one or more of polyphthalamide (PPA), polybutylene terephthalate (PBT), polypropylene (PP) and aliphatic polyamide (PA).

A polyamide is a polymer having repeating units linked by amide bonds, and can include aliphatic polyamides, polyphthalamides (e.g., PPA/high performance polyamide) and aramids (e.g., para-aramid and meta-aramid). Thus, in some aspects of the disclosure the polymer component includes PPA, which is a polyamide in which 55% or more moles of the carboxylic acid portion of the repeating unit in the polymer chain is composed of a combination of terephthalic (TPA) and isophthalic (IPA) acids. In further aspects the polymer component includes aliphatic polyamide, which is a straight-chain polyamide and includes the various forms of nylon such as, but not limited to, nylon 6 (PA6), nylon 66 (PA66) and nylon 9 (PA9).

As used herein, "polybutylene terephthalate" can be used interchangeably with poly(1,4-butylene terephthalate). Polybutylene terephthalate is one type of polyester. Polyesters, which include poly(alkylene dicarboxylates), liquid crystalline polyesters, and polyester copolymers, can be useful in the disclosed thermoplastic compositions of the present disclosure.

As used herein, "polypropylene" can be used interchangeably with poly(propene).

The thermoplastic composition includes from about 0.5 wt% to about 60 wt% of a filler component including porous silica particles. It has been surprisingly discovered that compositions including the polymer component described herein and porous silica particles have improved dielectric properties (e.g., lower Dk) than compositions including virgin glass fibers or even low Dk glass fibers. As used herein, porous silica refers to a substance containing silicon oxide having a porous structure as a main component. The porous silica used in the present disclosure has a pore forming a hexagonal structure. Specifically, the porous silica has an X-ray diffraction pattern in a hexagonal form, or a hexagonal structure can be observed when pores of the porous silica is directly observed with a transmission electron microscope.

In some aspects the porous silica particles have an average pore size of less than about 1 micron (µm). The average pore size of the porous silica in the present disclosure can be obtained by known methods. Specifically, the average pore size can be calculated from a nitrogen adsorption isotherm. More specifically, the average pore size can calculated from known BJH method, BET method, t method, DFT method, or the like.

The porous silica particles have an average particle size of less than about 20 µm in certain aspects. The average particle size can be determined by any suitable method, including a laser method or a dynamic light scattering method.

The porous silica particles may have a circular or non-circular cross section. In particular aspects the porous silica particles include porous silica microspheres or micro balloons. Porous silica microspheres are available from, e.g., Estone.

The filler component may further include low Dk glass fibers in some aspects. In certain aspects the low Dk glass fibers have a Dk of less than about 5.0 at 1 megahertz (MHz) and a Df of less than about 0.002 at 1 MHz. Low Dk glass fibers are available from, e.g., CPIC. If low Dk glass fibers are included in the filler component, any suitable ratio of porous silica particles to low Dk glass fibers may be used. The low Dk glass fibers may be sized or unsized. Sized glass fibers are coated on their surfaces with a sizing composition selected for compatibility with the polymeric base resin. The sizing composition facilitates wet-out and wet-through of the polymer component upon the fiber strands and assists in attaining desired physical properties in the thermoplastic composition.

In some aspects the composition further includes from greater than 0 wt% to about 20 wt% of an additional polymer component. The additional polymer component may include, but is not limited to, polyethylene (PE), polyethylene terephthalate (PET), polycarbonate (PC), polyetherimide (PEI), poly(p-phenylene oxide) (PPO), polyether ether ketone (PEEK), polysulfone (PSU), high-impact polystyrene (HIPS), acrylonitrile butadiene styrene (ABS), polystyrene (PS), polyphenylene sulfide (PPS), blends thereof, copolymers thereof, or combinations thereof.

In further aspects the composition includes from greater than 0 wt% to about 50 wt% of one or more additional additives. The one or more additional additives may include, but are not limited to, a reinforcing agent, an impact modifier, an enhancer, an acid scavenger, an anti-drip agent, an antioxidant, an antistatic agent, a chain extender, a colorant, a de-molding agent, a flow promoter, a flow modifier, a lubricant, a mold release agent, a plasticizer, a quenching agent, a flame retardant, a UV absorbing additive, a UV reflecting additive, a UV stabilizer, a siloxane, or a combination thereof. In a particular aspect the one or more additional additives includes an impact modifier including a styrene and ethylene/butylene (SEBS) copolymer, a polyester ether elastomer/ethylene-ethylacrylate copolymer, or a combination thereof.

### Properties of the Thermoplastic Compositions

Thermoplastic compositions according to aspects described herein have improved properties as compared to similar compositions that include virgin glass fibers instead of the porous silica particles or that include only low Dk glass fibers instead of the porous silica particles.

In particular, the thermoplastic composition in some aspects has a Dk that is at least about 10% lower than that of a substantially identical reference composition that includes a filler component including virgin glass fibers instead of the porous silica particles. As used herein, virgin glass fibers are conventional glass fibers such as round or flat glass fibers; virgin glass fibers do not include the low Dk glass fibers described herein. In further aspects the thermoplastic composition has a Dk that is from about 10% lower to about 20% lower than that of a substantially identical reference composition that includes a filler component including virgin glass fibers instead of the porous silica particles.

As used herein, a "substantially identical reference composition" is a composition that includes the same components, and the same amounts of the components, as the example composition, except that the reference composition does not include the recited component (e.g., porous silica particles) or is replaced with the recited component (e.g., the porous silica particles are replaced with virgin glass fibers).

In aspects in which the filler component includes porous silica particles and low Dk glass fibers as described herein, the composition may have a Dk that is at least about 1% lower than that of a substantially identical reference composition that does not include the porous silica particles in the filler component; in other words the reference composition in such aspects includes the low Dk glass fibers and does not include porous silica fibers. In a particular example in which the composition includes 20 wt% porous silica fibers and 10 wt% low Dk glass fibers (total 30 wt% filler component), the substantially identical reference composition that does not include the porous silica particles includes 30 wt% low Dk glass fibers.

In further aspects in which the filler component includes porous silica particles and low Dk glass fibers as described herein, the composition may have a Dk that is from about 1% to about 10% lower than that of a substantially identical reference composition that does not include the porous silica particles in the filler component

### METHODS OF MANUFACTURE

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polycarbonate has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### ARTICLES OF MANUFACTURE

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles, structural components or functional components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In particular aspects the article is a structural or functional component of an antenna or radio frequency (RF) component of a personal or commercial electronics device.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a. from about 20 wt% to about 80 wt% of a polymer component comprising one or more of polyphthalamide (PPA), polybutylene terephthalate (PBT), polypropylene (PP) and aliphatic polyamide (PA); and
b. from about 0.5 wt% to about 60 wt% of a filler component comprising porous silica particles,
wherein the composition has a dielectric constant (Dk) at 1.9 gigahertz (GHz) as measured in accordance with ASTM D150 that is less than about 3.5.

Aspect 2. The thermoplastic composition according to Aspect 1, wherein the composition has a dissipation factor (Df) at 1.9 GHz that is less than about 0.015.

Aspect 3. The thermoplastic composition according to Aspect 1 or 2, wherein the composition has a Dk that is at least about 10% lower than that of a substantially identical reference composition that includes a filler component comprising virgin glass fibers instead of the porous silica particles.

Aspect 4. The thermoplastic composition according to any of Aspects 1 to 3, wherein the filler component further comprises low Dk glass fibers.

Aspect 5. The thermoplastic composition according to Aspect 4, wherein the low Dk glass fibers have a Dk of less than about 5.0 at 1 MHz and a Df of less than about 0.002 at 1 MHz.

Aspect 6. The thermoplastic composition according to Aspect 4 or 5, wherein the composition has a Dk that is at least about 1% lower than that of a substantially identical reference composition that does not include the porous silica particles in the filler component.

Aspect 7. The thermoplastic composition according to any of Aspects 1 to 6, wherein the porous silica particles comprise porous silica microspheres.

Aspect 8. The thermoplastic composition according to any of Aspects 1 to 7, wherein the porous silica particles have an average particle size of less than about 20 micron (µm) and an average pore size of less than about 1 µm.

Aspect 9. The thermoplastic composition according to any of Aspects 1 to 8, wherein the porous silica particles have a circular or non-circular cross section.

Aspect 10. The thermoplastic composition according to any of Aspects 1 to 9, wherein the composition comprises from greater than 0 wt% to about 20 wt% of an additional polymer component.

Aspect 11. The thermoplastic composition according to Aspect 10, wherein the additional polymer component comprises polyethylene (PE), polyethylene terephthalate (PET), polycarbonate (PC), polyetherimide (PEI), poly(p-phenylene oxide) (PPO), polyether ether ketone (PEEK), polysulfone (PSU), high-impact polystyrene (HIPS), acrylonitrile butadiene styrene (ABS), polystyrene (PS), polyphenylene sulfide (PPS), blends thereof, copolymers thereof, or combinations thereof.

Aspect 12. The thermoplastic composition according to any of Aspects 1 to 11, wherein the composition comprises from greater than 0 wt% to about 50 wt% of one or more additional additives.

Aspect 13. The thermoplastic composition according to Aspect 12, wherein the one or more additional additives comprises a reinforcing agent, an impact modifier, an enhancer, an acid scavenger, an anti-drip agent, an antioxidant, an antistatic agent, a chain extender, a colorant, a de-molding agent, a flow promoter, a flow modifier, a lubricant, a mold release agent, a plasticizer, a quenching agent, a flame retardant, a UV absorbing additive, a UV reflecting additive, a UV stabilizer, a siloxane, or a combination thereof.

Aspect 14. The thermoplastic composition according to Aspect 13, wherein the one or more additional additives comprises an impact modifier comprising a styrene and ethylene/butylene (SEBS) copolymer, a polyester ether elastomer/ethylene-ethylacrylate copolymer, or a combination thereof.

Aspect 15. An article comprising the thermoplastic composition according to any of Aspects 1 to 14.

Aspect 16. The article of Aspect 15, wherein the article is structural or functional component of an antenna or radio frequency (RF) component of a personal or commercial electronics device.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The components listed in Table 1 were used in one or more of the example or comparative compositions described herein:

**Table 1 - Raw materials**

| **Item** | **Trade Name** | **CAS#** | **Supplier** |
|---|---|---|---|
| PPA | Polyphthalamide N600 | 25776-72-1 | NHU specialty |
| PBT | PBT195 | 26062-94-2 | CCP |
| PP | Yuplene® H360F | 9003-07-0 | SK |
| PET | PET 3947 | 25038-59-9 | DuPont |
| Heat stabilizer | Irgafos® 168 | 31570-04-4 | CIBA |
| GF1 | Glass fiber, PPG 3540 | 65997-17-3 | PPG |
| GF2 | low Dk Glass fiber, ECS(HL)303 | 65997-17-3 | CPIC |
| GF3 | Flat glass fiber, CSG 3PA-830 | 65997-17-3 | Nittobo |
| Porous silica | Soft silica SS004D | 7631-86-9 | Estone |
| EMA-GMA | Lotader® AX8900 | 51541-08-3 | Arkema |
| Antioxidant 1 | Irganox® 1098 | 23128-74-7 | BASF |
| Antioxidant 2 | AO1010 | 6683-19-8 | BASF |
| SEBS | G1651 | 66070-58-4 | Kraton |
| Elastomer | HYTREL® 4056 thermoplastic polyester elastomer | 61987-75-5 | DuPont |
| EEA | AMPLIFY™ EA 102 Functional Polymer | 9010-86-0 | Dow |
| PP-MAH | Polybond® 3200 | 9003-07-0 | Addivant |

Example compositions including polyphthalamide (PPA) and porous silica particles were formed and tested for various properties, including Dk and flow/melt volume rate (MVR). Comparative compositions included virgin (GF1) or low Dk (GF2) glass fibers. The compositions and their properties are shown in Table 2:

**Table 2 - Porous Silica in PPA**

| **Components** | | **C1.1** | **C1.2** | **Ex1.1** | **Ex1.2** | **Ex1.3** | **Ex1.4** |
|---|---|---|---|---|---|---|---|
| PPA | % | 49.7 | 49.7 | 49.7 | 49.7 | 49.7 | 49.7 |
| Heat stabilizer | % | 0.15 | 0.15 | 0.15 | 0.15 | 0.15 | 0.15 |
| Antioxidant 2 | % | 0.15 | 0.15 | 0.15 | 0.15 | 0.15 | 0.15 |
| GF1 (virgin) | % | 50 | | | | | |
| GF2 (low Dk) | % | | 50 | 40 | 30 | 20 | |
| Porous silica | % | | | 10 | 20 | 30 | 50 |

| **Properties** | | | | | | | |
|---|---|---|---|---|---|---|---|
| Dielectric constant (Dk), 1.9 GHz | | 4.07 | 3.583 | **3.49** | **3.506** | **3.45** | **3.35** |
| Dissipation factor (Df), 1.9 GHz | | 0.0117 | 0.0109 | 0.0116 | 0.0124 | 0.01326 | 0.0146 |
| MVR (340°C, 1.2KG, 6min) | cm³/10min | 10.5 | 11 | 10.5 | 15.8 | 14 | **40** |
| MVR (340°C, 1.2KG, 18min) | cm³/10min | 7.8 | 8.5 | 8.2 | 6.6 | 5.8 | **28** |
| Tensile modulus | MPa | 17017 | 15432 | 13513 | 11661 | 10077 | 5170 |
| Tensile stress | MPa | 231 | 198 | 187 | 164 | 132 | 83 |
| Tensile elongation | % | 1.9 | 1.8 | 1.9 | 1.8 | 1.6 | 1.7 |
| Flexural modulus | MPa | 15200 | 14100 | 12300 | 10700 | 9180 | 4960 |
| Flexural strength | MPa | 330 | 232 | 249 | 226 | 189 | 116 |
| Heat deflection temperature (1.82MPa, 3.2mm) | °C | 281 | 282 | 283 | 282 | 282 | 174 |
| Notched Izod impact | J/m | 111 | 101 | 68.3 | 51 | 35 | 32 |
| Unnotched Izod impact | J/m | 1160 | 917 | 676 | 524 | 322 | 321 |
| CTE-Flow (0-80 °C) | µm/cm/°C | 15.5 | 15.1 | 18.2 | 23.6 | 29.9 | 58.3 |
| CTE-xFlow (0-80 °C) | µm/cm/°C | 61.8 | 55.1 | 58.9 | 56.9 | 54.4 | 57.5 |

| | | | | | | | |
|---|---|---|---|---|---|---|---|
| CTE-Flow - Coefficient of thermal expansion along the flow direction CTE-xFlow - Coefficient of thermal expansion along the cross-flow direction | | | | | | | |

PPA has a higher intrinsic Dk property as compared to other thermoplastic resins used in similar applications. Moreover, it is difficult to reduce the Dk of reinforced PPA compositions. As shown in Table 1, the comparative composition C1.1 including virgin glass fiber (GF1) had a Dk over 4. Replacing the virgin glass fiber with a low Dk glass fiber (GF2) in C1.2 provided a reduction in Dk to 3.58. As shown in Ex.1.1-Ex1.3, however, replacing the low Dk glass fiber (GF2) with increasing amounts of porous silica resulted in an incremental decrease in Dk as the porous silica content increased. The final example composition Ex1.4 that included only porous silica and no other glass fibers had the lowest Dk of 3.35. In addition, Ex1.4 had dramatically improved MVR as compared to the other compositions.

Additional example and comparative compositions including polybutylene terephthalate (PBT) were formed and tested for various properties, including Dk. The compositions and their properties are shown in Table 3:

**Table 3 - Porous silica in PBT and PP/PET**

| **Components** | | **C2.1** | **C2.2** | **Ex2** | **C3.1** | **C3.2** | **Ex3** | **C4** | **Ex4** |
|---|---|---|---|---|---|---|---|---|---|
| PBT | % | 47.4 | 47.4 | 47.4 | 40 | 40 | 40 | 50.1 | 50.1 |
| PP | % | | | | 21.6 | 21.6 | 21.6 | 10 | 10 |
| PET | % | 15 | 15 | 15 | | | | | |
| GF3 (virgin, flat) | % | 30 | | | 30 | | | | |
| GF2 (low Dk) | % | | 30 | 20 | | 30 | 25 | 30 | 20 |
| Porous silica | % | | | 10 | | | 5 | | 10 |
| Elastomer | % | 2.5 | 2.5 | 2.5 | | | | 2.5 | 2.5 |
| EMA-GMA | % | 3 | 3 | 3 | | | | 3 | 3 |
| EEA | % | 2 | 2 | 2 | 5 | 5 | 5 | 2 | 2 |
| PP-MAH | % | | | | | | | 2 | 2 |
| SEBS | % | | | | 3 | 3 | 3 | | |
| Heat stabilizer | % | | | | 0.1 | 0.1 | 0.1 | | |
| Antioxidant 2 | % | 0.1 | 0.1 | 0.1 | 0.1 | 0.1 | 0.1 | | |

| **Properties** | | | | | | | | | |
|---|---|---|---|---|---|---|---|---|---|
| Dk, 1.9 GHz | | 3.63 | 3.14 | **3.1** | 3.1 | 2.82 | **2.8** | 3.09 | **3** |
| Df, 1.9 GHZ | | 0.0011 | 0.01 | 0.01 | 0.007 | 0.006 | 0.0063 | 0.011 | 0.01 |
| MVR (270C, 5kg, 6min) | cm³/10 min | 50 | 51 | **68** | 57 | 52.7 | **56** | 6.99 | **8.2** |
| Tensile Modulus | MPa | 9154 | 7891 | 6052 | 7201 | 6382 | 5758 | 6804 | 7045 |
| Tensile stress at break | MPa | 130 | 119 | 96.5 | 78.4 | 73.2 | 68.8 | 99.8 | 93.9 |
| Tensile elongation | % | 2.5 | 3 | 3.3 | 2.21.9 | 2.2 | 2.2 | 3.1 | 2.6 |
| Flexural Modulus | MPa | 8010 | 7220 | 5550 | 6300 | 5960 | 5340 | 5860 | 6140 |
| Flexural stress | MPa | 192 | 181 | 152 | 120 | 118 | 107 | 153 | 147 |
| Notched Izod impact | J/m | 133 | 142 | 98.6 | 94 | 94 | 85.9 | 144 | 146 |
| Unnotched Izod impact | J/m | 1040 | 1090 | 889 | 496 | 556 | 528 | 978 | 797 |
| Heat deflection temp (1.82MPa, 3.2mm) | °C | | 206 | 200 | | 186 | 173 | 202 | 202 |
| Shrinkage Parallel | % | | 0.07 | 0.16 | | 0.02 | 0.09 | 0.3 | 0.29 |
| Shrinkage perpendicular | % | | 0.56 | 0.76 | | 0.33 | 0.51 | 0.57 | 0.51 |

Comparative composition C2.1 was a PBT/PET blend including 30 wt% virgin flat glass fiber (GF3) and had a Dk of 3.63. When GF3 was replaced by low Dk glass fiber (GF2) in C2.2 the Dk was reduced to 3.14. When 10 wt% porous silica replaced a portion of the low Dk glass fibers in Ex2, Dk was slightly reduced to 3.1 (reduction of 1.3% compared to the composition including only the low Dk glass fibers). Of note, however, flow (MVR) of this composition was significantly improved, from 51 cubic centimeters per 10 minutes (cm³/10) min to 68 cm³/10 min.

As shown in comparative composition C3.1, the PBT/PP/virgin glass fiber composition had a Dk of 3.1. When the virgin glass fiber was replaced with low Dk glass fiber in C3.2, Dk was lower at 2.82. When a portion of the low Dk glass fiber was replaced with porous silica in Ex3, Dk was further reduced to 2.8 (a 0.7% reduction), and flow (MVR) increased compared to C3.2 and was generally the same as C3.1. A similar trend was observed between comparative composition C4 (30 wt% low Dk glass fibers) and Ex4 (10 wt% porous silica and 20 wt% low Dk fibers); Dk was decreased by 2.9% and flow (MVR) increased.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a. from about 20 wt% to about 80 wt% of a polymer component comprising one or more of polyphthalamide (PPA), polybutylene terephthalate (PBT), polypropylene (PP) and aliphatic polyamide (PA); and
b. from about 0.5 wt% to about 60 wt% of a filler component comprising porous silica particles,
wherein the composition has a dielectric constant (Dk) at 1.9 gigahertz (GHz) as measured in accordance with ASTM D150 that is less than about 3.5.

2. The thermoplastic composition according to claim 1, wherein the composition has a dissipation factor (Df) at 1.9 GHz that is less than about 0.015.

3. The thermoplastic composition according to claim 1 or 2, wherein the composition has a Dk that is at least about 10% lower than that of a substantially identical reference composition that includes a filler component comprising virgin glass fibers instead of the porous silica particles.

4. The thermoplastic composition according to any of claims 1 to 3, wherein the filler component further comprises low Dk glass fibers.

5. The thermoplastic composition according to claim 4, wherein the low Dk glass fibers have a Dk of less than about 5.0 at 1 MHz and a Df of less than about 0.002 at 1 MHz.

6. The thermoplastic composition according to claim 4 or 5, wherein the composition has a Dk that is at least about 1% lower than that of a substantially identical reference composition that does not include the porous silica particles in the filler component.

7. The thermoplastic composition according to any of claims 1 to 6, wherein the porous silica particles comprise porous silica microspheres.

8. The thermoplastic composition according to any of claims 1 to 7, wherein the porous silica particles have an average particle size of less than about 20 micron (µm) and an average pore size of less than about 1 µm.

9. The thermoplastic composition according to any of claims 1 to 8, wherein the porous silica particles have a circular or non-circular cross section.

10. The thermoplastic composition according to any of claims 1 to 9, wherein the composition comprises from greater than 0 wt% to about 20 wt% of an additional polymer component.

11. The thermoplastic composition according to claim 10, wherein the additional polymer component comprises polyethylene (PE), polyethylene terephthalate (PET), polycarbonate (PC), polyetherimide (PEI), poly(p-phenylene oxide) (PPO), polyether ether ketone (PEEK), polysulfone (PSU), high-impact polystyrene (HIPS), acrylonitrile butadiene styrene (ABS), polystyrene (PS), polyphenylene sulfide (PPS), blends thereof, copolymers thereof, or combinations thereof.

12. The thermoplastic composition according to any of claims 1 to 11, wherein the composition comprises from greater than 0 wt% to about 50 wt% of one or more additional additives.

13. The thermoplastic composition according to claim 12, wherein the one or more additional additives comprises a reinforcing agent, an impact modifier, an enhancer, an acid scavenger, an anti-drip agent, an antioxidant, an antistatic agent, a chain extender, a colorant, a de-molding agent, a flow promoter, a flow modifier, a lubricant, a mold release agent, a plasticizer, a quenching agent, a flame retardant, a UV absorbing additive, a UV reflecting additive, a UV stabilizer, a siloxane, or a combination thereof.

14. The thermoplastic composition according to claim 13, wherein the one or more additional additives comprises an impact modifier comprising a styrene and ethylene/butylene (SEBS) copolymer, a polyester ether elastomer/ethylene-ethylacrylate copolymer, or a combination thereof.

15. An article comprising the thermoplastic composition according to any of claims 1 to 14, wherein the article is structural or functional component of an antenna or radio frequency (RF) component of a personal or commercial electronics device.
